# EUROPÄISCHE PATENTSCHRIFT

(11) **EP 0 986 761 B1**
(45) Veröffentlichungstag und Bekanntmachung des Hinweises auf die Patenterteilung: **17.03.2004**
(21) Anmeldenummer: 98965600.4
(22) Anmeldetag: 02.12.1998
(51) Int. Cl.: G01P 3/48, G01D 5/18

(54) **ELEKTRONISCHER SIGNALGEBER MIT AUSWERTESCHALTUNG**
ELECTRONIC SIGNAL TRANSMITTER WITH EVALUATION CIRCUIT
EMETTEUR ELECTRONIQUE DE SIGNAUX AVEC CIRCUIT D'EVALUATION

(30) Priorität: 21.03.1998 DE 19812486
(43) Veröffentlichungstag der Anmeldung: 22.03.2000
(73) Patentinhaber: ROBERT BOSCH GMBH, 70442 Stuttgart (DE)
(72) Erfinder: WALTHER, Michael, D-71696 Möglingen (DE)
(86) Internationale Anmeldenummer: PCT/DE1998/003540
(87) Internationale Veröffentlichungsnummer: WO 1999/049321

(56) Entgegenhaltungen:
- EP-A- 0 419 093
- EP-A- 0 513 815
- DE-A- 4 115 295
- DE-A- 4 209 167
- PATENT ABSTRACTS OF JAPAN vol. 096, no. 007, 31. Juli 1996 -& JP 08 065876 A (ADVANTEST CORP), 8. März 1996

## Beschreibung

Die Erfindung betrifft einen elektronischen Signalgeber mit Stromschnittstelle und einer Auswerteschaltung für den Signalgeber nach dem Oberbegriff des Anspruchs 1, bei welcher der vom Signalgeber abgegebene Signalstrom in einem Element in eine Signalspannung umgesetzt wird.

Eine derartige Auswerteschaltung wird insbesondere bei Aktuatoren und Sensoren angewendet, welche als Ausgangssignal einen Strom abgeben. So wird eine derartige Auswerteschaltung häufig bei Sensoren verwendet, mittels welcher die Drehzahl von Rädern von Kraftfahrzeugen zur Auswertung in Antiblockier-Steuergeräten erfaßt wird. Das Sensor-Ausgangssignal schwankt hierbei je nach Signalzustand zwischen zwei Stromwerten. Übliche Werte des Signalstromes sind beispielsweise 10 Milliampere für einen niedrigen Signalpegel und 20 Milliampere für einen hohen Signalpegel.

Zur Umwandlung des Signalstroms in eine von beispielsweise Komparatoren auswertbare Signalspannung wird der Strom durch einen Meßwiderstand geleitet. Der Meßwiderstand ist mit dem Sensor in Reihe geschaltet. Durch die Reihenschaltung verringert sich die über dem Sensor anliegende Spannung um die am Meßwiderstand abfallende Spannung. Je nach Signalzustand liegt somit über dem Sensor eine unterschiedliche Spannung an.

Da der Meßwiderstand üblicherweise so bemessen ist, daß die an ihm abfallende Spannung 1,5 Volt bis 3 Volt beträgt, verringert sich die für den Sensor zur Verfügung stehende Versorgungsspannung um 1,5 Volt bis 3 Volt. Dies kann die Funktion des Sensors beeinträchtigen. Durch eine Verringerung des Meßwiderstandes könnte zwar erreicht werden, daß die für den Sensor zur Verfügung stehende Versorgungsspannung keine großen Schwankungen mehr aufweist, jedoch liefert ein kleiner Meßwiderstand nur sehr kleine Signale. Hierdurch treten Probleme bei der Auswertung der Signale auf. Des weiteren vergrößert sich der Einfluß von Störkopplungen und ähnlichen Störungen.

Darüber hinaus muß der Meßwiderstand für eine relativ große Leistung ausgelegt sein, da an ihm im Falle einer Funktionsstörung des Sensors oder eines Fehlers im Kabelbaum (z. B. Kurzschluß) die volle Versorgungsspannung abfallen kann.

Es ist Aufgabe der Erfindung eine eingangs genannte Auswerteschaltung derart auszubilden, daß die über dem Sensor anliegende Spannung geringere Schwankungen aufweist.

Die Lösung dieser Aufgabe ergibt sich aus den Merkmalen des kennzeichnenden Teils des Anspruchs 1. Vorteilhafte Weiterbildungen der Erfindung ergeben sich aus den Unteranspruchen.

Gemäß der Erfindung wird der Signalstrom über die Drain-Source-Strecke eines Strom-Sense-FETs geführt, wobei der Sense-Ausgang des Strom-Sense-FETs mit dem Umsetzungselement verbunden ist. Dadurch, daß der Signalstrom des Signalgebers über die Drain-Source-Strecke des Sense-FETs geführt wird, entsteht ein relativ geringer Spannungsabfall. Der vergleichbare Widerstand der Drain-Source-Strecke des Sense-FETs beträgt regelmäßig weniger als 1 Ohm, so daß die bei einem Signalstrom von 20 Milliampere abfallende Spannung weniger als 20 Millivolt beträgt. Sie ist damit gegenüber der Versorgungsspannung vernachlässigbar, so daß für den Sensor die volle Versorgungsspannung zur Verfügung steht. Dies wirkt sich besonders günstig auf die Funktion des Sensors aus, da die Versorgungsspannungsabhängigkeit des Sensors keinen Einfluß mehr hat.

Der Sense-Ausgang des Sense-FETs liefert entsprechend dem Kopplungsfaktor des Sense-FETs einen dem über die Drain-Source-Strecke fließenden Strom entsprechenden Strom. Der vom Sense-Ausgang des Sense-FETs abgegebene Strom wird in dem Umsetzungselement in eine Spannung umgewandelt. Da diese Spannung nicht mehr mit der Versorgungsspannung des Sensors in Reihe liegt, hat sie keine Rückwirkungen mehr auf den Sensor.

In vorteilhafter Weise ist der Sense-Ausgang des Sense-FETs über einen Stromspiegel mit dem Umsetzungselement verbunden. Hierdurch findet eine weitere Entkopplung der am Umsetzungselement abfallenden Spannung statt. Die Schaltung kann so dimensioniert werden, daß die an dem Umsetzungselement abfallende Spannung einen für die weitere Signalverarbeitung optimalen wert annimmt.

Bei einer weiteren Ausführungsform der Erfindung ist eine Überwachungsschaltung vorgesehen, deren Ausgang mit dem Gate-Anschluß des Sense-FETs verbunden ist. In besonders vorteilhafter Weise ist ein Eingang der Überwachungsschaltung mit dem Drain-Anschluß des Sense-FETs verbunden. Durch die Überwachungsschaltung läßt sich der Sense-FET im Fehlerfall ausschalten, so daß keine Verlustleistung mehr auftritt. Hierdurch kann die Schaltung für sehr geringe Leistungen ausgelegt werden.

Durch die Erfindung wird eine vernachlässigbare Schwankung der für den Sensor zur Verfügung stehenden Versorgungsspannung im Prinzip dadurch erreicht, daß kein direkter Meßwiderstand eingesetzt wird, sondern zunächst eine Strom-Strom- Transformation durchgeführt wird. Hierdurch wird das Problem, daß ein großer Meßwiderstand Spannungsprobleme verursacht und ein kleiner Meßwiderstand keine auswertbaren Signale liefert und nachteilig im Hinblick auf Störkopplungen ist, umgangen. Mittels des Sense-FETs wird eine Stromschnittstelle zur Verfügung gestellt.

Weitere Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine erste erfindungsgemäße Auswerteschaltung mit einem Source-Sense-FET,
- Figur 2: eine erste erfindungsgemäße Auswerteschaltung mit einem Drain-Sense-FET,
- Figur 3: eine zweite erfindungsgemäße Auswerteschaltung mit einem Source-Sense-FET und
- Figur 4: eine zweite erfindungsgemäße Auswerteschaltung mit einem Drain-Sense-FET.

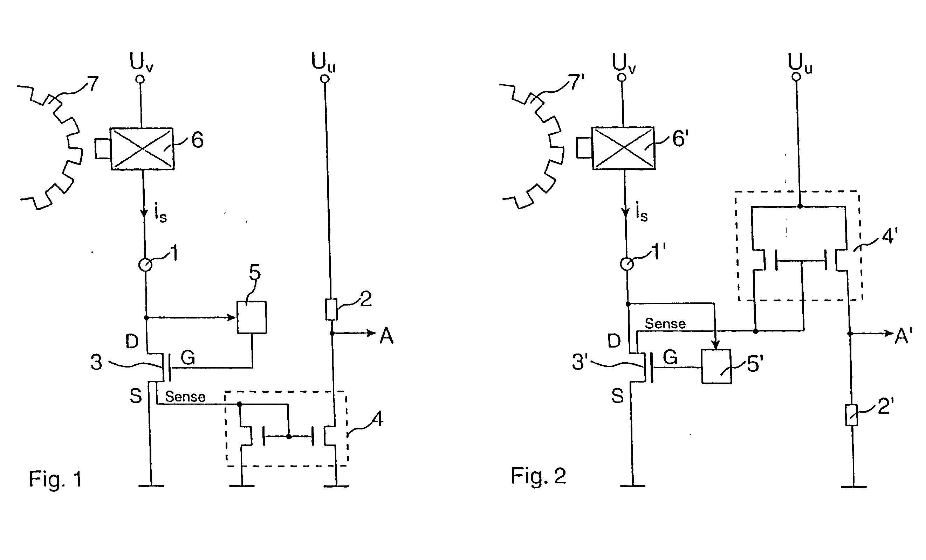

Wie der Figur 1 entnommen werden kann, ist ein aktiver Sensor 6 einerseits mit einer Versorgungsspannung Uᵥ verbunden. Andererseits ist der aktive Sensor 6 mit dem Drain-Anschluß eines Strom-Sense-FETs 3 verbunden. Der aktive Sensor 6 liefert je nach Signalzustand einen Signalstrom (is) unterschiedlicher Größe. Die Stromschnittstelle des aktiven Sensors 6 ist mit dem Bezugszeichen 1 versehen.

Der Source-Anschluß des Sense-FETs 3 ist mit Masse verbunden. Der Drain-Anschluß des Sense-FETs 3 ist auch mit dem Eingang einer Überwachungsschaltung 5 verbunden. Der Ausgang der Überwachungsschaltung 5 steuert den Gate-Anschluß des Sense-FETs 3.

Der Sense-Ausgang des Sense-FETs 3 ist mit dem Eingang einer herkömmlichen Stromspiegelschaltung 4 verbunden. Der Ausgang der Stromspiegelschaltung 4 ist mit einem Anschluß eines Widerstands 2 verbunden. Der andere Anschluß des Widerstands 2 ist mit einer stabilisierten Versorgungsspannung Uᵤ verbunden. Der mit dem Stromspiegel 4 verbundene Anschluß des Widerstands 2 bildet den Ausgang A der Auswerteschaltung.

Im folgenden wird die Funktion der Schaltung beschrieben. Bewegt sich am aktiven Sensor 6 beispielsweise ein Zahn eines Zahnrads 7 vorbei, nimmt der Ausgangsstrom iₛ des Sensors 6 einen hohen Pegel an. Der Ausgangsstrom iₛ kann dann beispielsweise etwa 20 Milliampere betragen.

Der Sense-FET 3 ist im normalen Betriebszustand durchgeschaltet. Der Widerstand der Drain-Source-Strecke beträgt dann weniger als 1 Ohm. Der Spannungsabfall am Sense-FET beträgt also weniger als 20 Millivolt. Am Sensor 6 liegt somit etwa die volle Versorgungsspannung Uᵥ an.

Bei einem Kopplungsfaktor von beispielsweise 1 zu 100 gibt der Sense-Ausgang des Sense-FETs 3 0,2 Milliampere ab. Dieser Strom fließt in die Stromspiegelschaltung 4. Am Ausgang der Stromspiegelschaltung 4 fließen somit ebenfalls 0,2 Milliampere. Dieser Strom fließt durch den Widerstand 2. Beträgt die Größe des Widerstands 2 etwa 20 Kiloohm fallen an ihm 4 Volt ab. Die am Ausgang A der Auswerteschaltung anliegende Spannung entspricht dann der Größe der Versorgungsspannung minus 4 Volt.

Bewegt sich am Sensor 6 kein Zahn des Zahnrads 7 vorbei sondern eine Zahnlücke, beträgt der vom Sensor 6 abgegebene Signalstrom iₛ beispielsweise 10 Milliampere. Entsprechend der zuvor beschriebenen Funktionsweise entspricht die Spannung am Ausgang A der Auswerteschaltung dann der Versorgungsspannung minus 2 Volt.

Steigt die Spannung am Drain-Anschluß des Sense-FETs 3 in Folge einer Störung an und überschreitet einen vorbestimmten Schwellwert von beispielsweise einem Volt gibt die Uberwachungsschaltung 5 an den Gate-Anschluß des Sense-FETs 3 ein Signal ab, so daß der Sense-FET 3 abschaltet. Es fließt dann kein Strom mehr durch die Auswerteschaltung, so daß kein Anstieg der Verlustleistung erfolgt.

Die in Figur 2 dargestellte Auswerteschaltung entspricht im wesentlichen der in Figur 1 dargestellten Auswerteschaltung. Statt eines Source-Sense-Anschlusses weist der Sense-FET 3' jedoch einen Drain-Sense-Anschluß auf. Diesem Umstand entsprechend ist die Stromspiegelschaltung 4' anders ausgelegt. Der Widerstand 2' ist daraus resultierend statt mit der Versorgungsspannung Uᵥ mit Masse verbunden. Demzufolge entspricht die am Ausgang A' der Auswerteschaltung anstehende Spannung nicht der Versorgungsspannung minus 4 Volt beziehungsweise Versorgungsspannung minus 2 Volt sondern beträgt 4 Volt beziehungsweise 2 Volt.

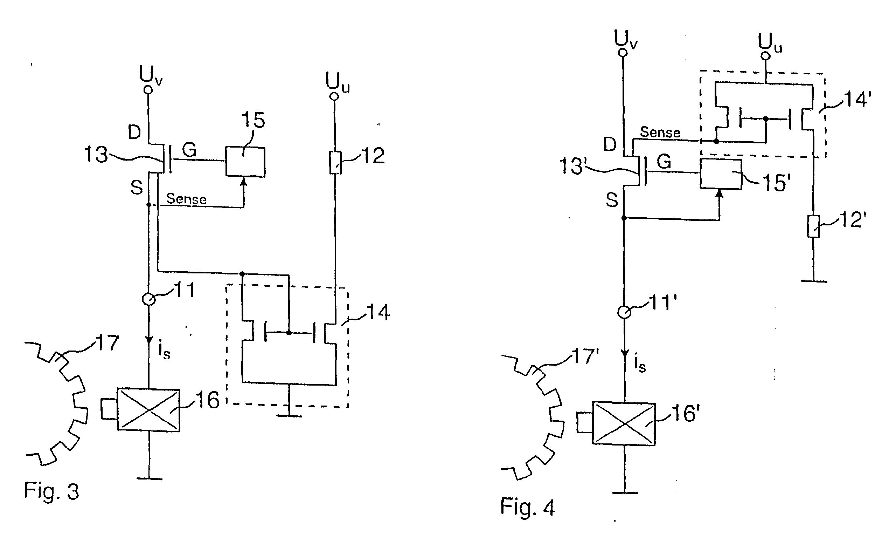

Die in den Figuren 3 und 4 dargestellten Auswerteschaltungen entsprechen im wesentlichen den in den Figuren 1 und 2 dargestellten Auswerteschaltungen. Anstatt mit der Versorgungsspannung ist der Sensor jedoch mit Masse verbunden, wodurch die betreffenden Bauelemente der Auswerteschaltung mit den Versorgungsspannungen verbunden sind und entsprechende Polaritätsveränderungen berücksichtigt wurden. Die Funktion der Schaltungen ist jedoch unverändert.

## Patentansprüche

1. Elektronischer Signalgeber (6; 6') mit Stromschnittstelle (1; 1') und einer Auswerteschaltung für den Signalgeber (6; 6'), bei welcher der vom Signalgeber (6; 6') abgegebene Signalstrom (iₛ) in einem Umsetzungselement (2; 2') in eine Signalspannung (uₛ) umgesetzt wird,
**dadurch gekennzeichnet,**
**daß** der Signalstrom über die Drain-Source-Strecke (D-S) eines Strom-Sense-FET (3; 3') geführt wird, wobei der Sense-Ausgang (Sense) des Strom-Sense-FET (3; 3') mit dem Umsetzungselement (2; 2') verbunden ist.

2. Elektronischer Signalgeber (6; 6') mit Stromschnittstelle (1; 1') und einer Auswerteschaltung nach Anspruch 1,
**dadurch gekennzeichnet,**
**daß** der Sense-Ausgang (Sense) über einen Stromspiegel (4; 4') mit dem Umsetzungselement (2; 2') verbunden ist.

3. Elektronischer Signalgeber (6; 6') mit Stromschnittstelle (1; 1') und einer Auswerteschaltung nach Anspruch 1 oder 2,
**dadurch gekennzeichnet,**
**daß** eine Überwachungsschaltung (5; 5') vorgesehen ist, deren Ausgang mit dem Gate-Anschluß (G) des Strom-Sense-FET (3; 3') verbunden ist.

4. Elektronischer Signalgeber (6; 6') mit Stromschnittstelle (1; 1') und einer Auswerteschaltung nach Anspruch 3,
**dadurch gekennzeichnet,**
**daß** ein Eingang der Überwachungsschaltung (5; 5') mit dem Drain-Anschluß (D) des Strom-Sense-FET (3; 3') verbunden ist.

## Claims

1. Electronic signal transmitter (6; 6') with current interface (1; 1') and an evaluation circuit for the signal transmitter (6; 6'), in which the signal current (iₛ) output by the signal transmitter (6; 6') is converted into a signal voltage (uₛ) in a conversion element (2; 2'),
**characterized**
**in that** the signal current is passed via the drain-source path (D-S) of a current-sense FET (3; 3'), the sense output (Sense) of the current-sense FET (3; 3') being connected to the conversion element (2; 2').

2. Electronic signal transmitter (6; 6') with current interface (1; 1') and an evaluation circuit according to Claim 1,
**characterized**
**in that** the sense output (Sense) is connected to the conversion element (2; 2') via a current mirror (4; 4').

3. Electronic signal transmitter (6; 6') with current interface (1; 1') and an evaluation circuit according to Claim 1 or 2,
**characterized**
**in that** a monitoring circuit (5; 5') is provided, the output of which is connected to the gate terminal (G) of the current-sense FET (3; 3').

4. Electronic signal transmitter (6; 6') with current interface (1; 1') and an evaluation circuit according to Claim 3,
**characterized**
**in that** an input of the monitoring circuit (5; 5') is connected to the drain terminal (D) of the current-sense FET (3; 3').

## Revendications

1. Emetteur électronique de signaux (6; 6') avec interface de courant (1; 1') et un circuit d'évaluation pour l'émetteur de signaux (6; 6'), dans lequel le courant de signal (iₛ) émis par l'émetteur de courant (6; 6') est converti en une tension de signal (uₛ) dans un élément de conversion (2; 2'),
**caractérisé en ce que**
le courant de signal est conduit par la section drain-source (D-S) d'un transistor à effet de champ (FET) à sens de courant (3; 3'), dans lequel la sortie de sens (Sense) du transistor FET à sens de courant (3; 3') est raccordée à l'élément de conversion (2; 2').

2. Emetteur électronique de signaux selon la revendication 1,
**caractérisé en ce que**
la sortie de sens (Sense) est raccordée à l'élément de conversion (2; 2') par un miroir de courant (4; 4').

3. Emetteur électronique de signaux selon la revendication 1 ou 2,
**caractérisé en ce qu'**
il et prévu un circuit de surveillance (5; 5'), dont la sortie est raccordée à la borne de porte (G) du transistor FET à sens de courant (3; 3').

4. Emetteur électronique de signaux selon la revendication 3,
**caractérisé en ce qu'**
une entrée du circuit de surveillance (5; 5') est raccordée à la borne de drain (D) du transistor FET à sens de courant (3; 3').
